# EUROPEAN PATENT APPLICATION

(11) **EP 0 970 972 A1**
(43) Date of publication of application: **12.01.2000**
(21) Application number: 98810654.8
(22) Date of filing: 10.07.1998
(51) Int. Cl.: C08F 4/00, C08F 4/80

(54) **Polymerizable composition containing Ru(II)-or Os(II)-complex catalysts**

(71) Applicant: Ciba Specialty Chemicals Holding Inc., 4057 Basel (CH)
(72) Inventor: Noels, Alfred Felix, 4030 Grivegnée (BE)

(57) **Abstract**

The present invention relates to a polymerizable composition comprising a) a polymerizable aliphatic monomer or oligomer containing ethylene groups, b) a catalytically effective amount of a mono-component ruthenium(II)- or osmium(II)-complex catalyst and c) a polymerization initiator containing a radically transferable atom or group. Another embodiment of the invention relates to a process for preparing an oligomer, a cooligomer, a polymer or a copolymer by free radical polymerization.

## Description

The present invention relates to a polymerizable composition comprising a) a polymerizable aliphatic monomer or oligomer containing ethylene groups, b) a catalytically effective amount of a mono-component ruthenium(II)- or osmium(II)-complex catalyst and c) a polymerization initiator containing a radically transferable atom or group, to a process for preparing the polymerizable composition and also to the use of ruthenium(II)- or osmium(II)- complex catalysts for polymerization.

More specifically, the present invention relates to a polymerizable composition and to a polymerization process which produces polymers having low polydispersity. The polymerization process proceeds with enhanced monomer to polymer conversion efficiency. In particular, this invention relates to a stable, free radical initiated polymerization process which produces homopolymers, random copolymers, block copolymers, multiblock copolymers, graft copolymers and the like, and which is characterized by enhanced rates of polymerization and enhanced monomer to polymer conversions.

Polymers or copolymers prepared by a conventional free radical polymerization reaction inherently have broad molecular weight distributions and a polydispersity range which is generally higher than four. This is explained by the fact that the half-life of most free radical initiators is relatively long, ranging from several minutes to many hours. Thus, not all polymeric chains are initiated at the same time and the initiators generate growing chains of various lengths at any time during the polymerization process. Another explanation is the reaction of propagating chains with each other in free radical side reactions known as combination and disproportionation. Both are irreversible chain terminating reaction steps. The formation of chains of varying lengths is terminated at different points of time during the reaction, resulting in polymers of very different chain lengths, i.e. from very small to extremely long and broad polydispersity ranges. Whenever a homogeneous molecular weight distribution is desirable in a free radical polymerization process, the growth of the polymer chains is to be initiated simultaneously to avoid termination at different points of time.

Therefore, any conventional radical polymerization process is characterized by significant drawbacks, such as difficulties in predicting or controlling the molecular weight distribution of the polymer obtained and the polydispersity range. Furthermore, free radical polymerization processes are difficult to control. Most polymerization reactions are strongly exothermic, rendering it almost impossible to efficiently remove heat from the highly viscous polymer. The problems of conventional free radical polymerization reactions of the types mentioned above could also result in an undesirable formation of gel-type polymers of broad molecular weight distribution. They are difficult to handle in subsequent working-up steps, such as separation, purification, filtering and drying.

There is an urgent need for suitable agents which are useful for overcoming these drawbacks and which provide an efficient control of free radical initiated polymerizations. This will result in the preparation of polymers of defined chemical, physical and physicochemical properties such as viscosity, hardness, gel content, clarity, high gloss, durability and the like.

*EP-A-735 052* discloses a method of preparing thermoplastic polymers of a narrow polydispersity range by a free radical-initiated polymerization, which comprises adding a free radical initiator and a stable free radical agent to the monomer compound. This method has the disadvantage that uncontrollable recombinations of the initiator radicals occur immediately after the formation of these thermoplastic polymers. This results in variable ratios between initiator radicals and stable free radicals and insufficient control over the polymerization process.

*WO 96/30421* discloses a polymerization process (atom transfer radical polymerization: ATRP) based on a redox reaction between transition metals of different oxidation states, e.g. Cu(I) and CU(II), providing "living" or controlled radical polymerization of ethylenically unsaturated polymers such as styrene or (meth)acrylates.

*EP-A-826 698* also discloses a method of preparing thermoplastic polymers by free radical-initiated polymerization. A complex catalyst system consisting of a transition metal halide complex catalyst and a cocatalyst is added together with the polymerization initiator. The transition metals in the complex catalysts are iron, ruthenium or osmium.

*M. Sawamoto* and *M. Kamigaito, J. Macromol. Sci (J.M.S.) - Pure Appl. Chem. A 34(10, pp. 1803 - 1814 (1997)* disclose the polymerization of methyl methacrylate with the initiator di-chloroacetophenone and a catalyst system consisting of RuCl₂(PPh₃)₃ and of the cocatalyst Al(O-iPr)₃.

It is desirable to carry out the polymerization process in the presence of a mono-component catalyst of defined structure, which avoids the necessity of balancing the components in redox systems, such as the ones disclosed in *WO 96/30421*, or in catalyst-cocatalyst systems, such as the ones disclosed in *EP-A-826 698* or by *M. Sawamoto* et al..

Surprisingly it has been found that certain mono-component transition metal complex catalysts based on ruthenium and osmium, which are active in the metathesis polymerization of cycloolefins, also are active in the polymerization of ethylenically unsaturated polymers, such as (meth)acrylates.

The present invention relates to a polymerizable composition, which comprises:
a) a polymerizable aliphatic monomer or oligomer containing ethylene groups;
b) a catalytically effective amount of a mono-component ruthenium(II) or osmium(II) complex catalyst containing a group of 2 to 5 ligands bonded to the coordination center, which group of ligands consists of at least one tertiary phosphine ligand and of at least one unsaturated carbocyclic ligand having at least two double bonds; and
c) a polymerization initiator containing a radically transferable atom or group.

The compositions according to the present invention are useful for many applications including a variety of specific technical applications, such as the preparation of block copolymers used as compatibilizers for polymer blends, or dispersants for coating systems. They are also useful for the preparation of polymers or copolymers of a homogeneous molecular weight distribution and low halogen content which are used for the preparation of oligomers in the coating technology, for the preparation of thermoplastic films, toner resins and liquid immersion development ink resins or ink additives for electrographic imaging processes.

The term polymerizable composition encompasses mixtures of components a), b) and c) and additional additives which may optionally be present. The composition is useful for the synthesis of polymers and copolymers, such as block, multi-block, star, gradient, random, hyperbranched and dendritic copolymers as well as graft or copolymers.

### Component a)

The polymerizable aliphatic monomer or oligomers may be water-soluble or water-insoluble. Preferred water-soluble monomers contain a carboxylic acid group which may also be present in carboxylate salt form. Preferred water insoluble monomers are free of acid and phenolic groups.

The polymerizable aliphatic monomers may contain one or more olefinic double bonds. The monomers may be of low (monomeric) or high (oligomeric) molecular mass. Examples of monomers containing one olefinic double bond are styrene, 4-hydroxystyrene, α-methylstyrene, p-methylstyrene, C₁-C₁₂-alkyl or 2-hydroxy-C₂-C₄-alkyl acrylates, 2-amino-C₂-C₄-alkyl acrylates, di-C₁-C₄-alkyl-2-amino-C₂-C₄-alkyl acrylates or the corresponding methacrylates, for example methyl, ethyl, n-butyl, isobutyl, tert.-butyl, 2-ethylhexyl or 2-hydroxyethyl acrylate, 2-dimethylaminoethylacrylate, glycidyl acrylate, isobornyl acrylate, methyl methacrylate, ethyl methacrylate, 2-hydroxyethyl(meth)acrylate, or 2-dimethylaminoethyl(meth)acrylate. Silicone acrylates are also advantageous. Other examples are acrylonitrile, acrylamide, acrylic or C₁-C₄-alkylacrylic acid anhydrides, e.g. methacrylic acid anhydride, C₁-C₄-alkylacrylamides, e.g. methacrylamide, N-substituted (meth)acrylamides, acrolein, styrene, C₁-C₄-alkyl-styrenes and halostyrenes.

The above-mentioned polymerizable aliphatic monomers may also be present in the composition as comonomers.

A preferred group of polymerizable aliphatic monomers is selected from the group consisting of styrene, acrolein, acrylonitrile, acrylic or C₁-C₄-alkylacrylic acid and salts, acrylic or C₁-C₄-alkylacrylic acid-C₁-C₄-alkyl esters, acrylic or C₁-C₄-alkylacrylamides and acrylic or C₁-C₄-alkylacrylic acid anhydrides. Suitable oligomers are composed of these preferred monomers.

A particularly preferred group of polymerizable aliphatic monomers is selected from the group consisting styrene, acrylic acid and salts, methacrylic acid and salts, acrylic acid -C₁-C₄-alkyl esters and methacrylic acid-C₁-C₄-alkyl esters.

Examples of monomers containing two or more double bonds are diacrylates of ethylene glycol, propylene glycol, neopentyl glycol, hexamethylene glycol or of bisphenol A, 4,4'-bis(2-acryloyloxyethoxy)diphenylpropane, trimethylolpropane triacrylate, pentaerythritol triacrylate or tetraacrylate or vinyl acrylate.

A polymerizable aliphatic oligomer containing ethylene groups is characterized by a relatively high molecular mass from about 500 to 3000. Suitable examples are acrylisized epoxy resins or acrylisized polyesters. Unsaturated oligomers of this kind may also be referred to as pre-polymers.

The acid monomers may be present in their free acid form or in the form of their alkali metal salts, e.g. sodium or potassium salts, or in the form of the ammonium addition salts. Suitable bases for neutralizing the acid monomers include sodium or potassium hydroxide, or aqueous ammonia. The acid monomers may be neutralized up to a level of 50% and preferably up to 20%. In many cases, the acid monomers may be used in the completely neutralized form. The monomers may be neutralized prior to or during polymerization.

The composition may contain the above-mentioned monomers or oligomers in an amount of 0.01 to 99% by weight, preferably 0.1 to 95% by weight, particularly preferably 1 to 90% by weight, and especially preferably 5 to 80% by weight, based on the monomers present in the composition.

### Component b)

In a mono-component ruthenium(II) or osmium(II) complex catalyst a group of 2 to 5 ligands is bonded to the coordination center, which group of ligands consists of at least one tertiary-substituted phosphine ligand and of at least one unsaturated carbocyclic ligand containing at least two double bonds.

The term mono-component distinguishes catalyst systems containing a transition metal catalyst such as RuCl₂(p-cumene)P(C₆H₁₁)₃ from a two component catalyst system, wherein one component is defined as the main catalyst component and the other as the activator component, such as diethylaluminium chloride and others, see page 9, lines 30 - 35.

A tertiary-substituted phosphine ligand contains 3 - about 40, preferably 3 - 30 and, with particular preference, 3 - 18 carbon atoms. The tertiary-substituted phosphine is preferably a compound of the formula 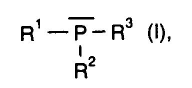 in which R¹, R² and R³ independently of one another are C₁-C₂₀alkyl, C₃-C₁₂cycloalkyl, C₂-C₁₁heterocycloalkyl, C₅-C₁₂aryl, C₁-C₁₂heteroaryl or C₆-C₁₄aralkyl, where alkyl, cycloalkyl, heterocycloalkyl, aryl, heteroaryl and aralkyl are unsubstituted or substituted by one or more substituents of the group consisting of C₁-C₆alkyl, C₁-C₆alkoxy, C₁-C₆haloalkyl, C₅-C₁₂aryl, -NO₂, SO₃⁻, ammonium and halogen; the radicals R¹ and R² together are unsubstituted or C₁-C₆alkyl-, C₁-C₆haloalkyl-, -NO₂ - or C₁-C₆alkoxy-substituted tetra- or pentamethylene, which may be fused to 1 or 2 1,2-phenylene radicals, and R³ is as defined above.

In the context of the present invention's description the term C₁-C₂₀alkyl embraces methyl, ethyl and the isomers of propyl, butyl, pentyl, hexyl, heptyl, octyl, nonyl, decyl, undecyl and dodecyl. An example of aryl-substituted alkyl is benzyl. Examples of alkoxy are methoxy, ethoxy and the isomers of propoxy and butoxy.

Some examples of cycloalkyl are cyclobutyl, cycloheptyl, cyclooctyl and especially cyclopentyl and cyclohexyl. Examples of substituted cycloalkyl are methyl-, dimethyl-, trimethyl-, methoxy-, dimethoxy-, trimethoxy-, trifluoromethyl-, bis-trifluoromethyl- and tris-trifluoromethyl-substituted cyclopentyl and cyclohexyl.

Examples of aryl are phenyl and naphthyl. Examples of aryloxy are phenoxy and naphthyloxy. Examples of substituted aryl are methyl-, dimethyl-, trimethyl-, methoxy-, dimethoxy-, trimethoxy-, trifluoromethyl-, bis-trifluoromethyl- or tris-trifluoromethyl-substituted phenyl. An example of aralkyl is benzyl. Examples of substituted aralkyl are methyl-, dimethyl-, trimethyl-, methoxy-, dimethoxy-, trimethoxy-, trifluoromethyl-, bis-trifluoromethyl or tris-trifluoromethyl-substituted benzyl.

The term heterocycloalkyl embraces one or two and heteroaryl from one to four heteroatoms, the heteroatoms being selected from the group nitrogen, sulfur and oxygen. Some examples of heterocycloalkyl are tetrahydrofuryl, pyrrolidinyl, piperazinyl and tetrahydrothienyl. Some examples of heteroaryl are furyl, thienyl, pyrrolyl, pyridyl and pyrimidinyl.

Preference is given to tertiary-substituted phosphine (I) in which R¹, R² and R³ are identical substituents, e.g. C₁-C₆alkyl or phenyl. Particular preference is given, furthermore, to radicals R¹, R² and R³ which are sterically bulky, for example cyclic or branched, especially α,α-di-branched and very especially α-branched alkyl groups.

Another group of preferred compounds consists of tertiary-substituted phosphine (I) in which R¹, R² and R³ independently of one another are C₁-C₁₂alkyl, C₅-C₈cycloalkyl, C₆-C₁₂aryl or C₇-C₁₃aralkyl in which alkyl, cycloalkyl, aryl and aralkyl are unsubstituted or substituted by one or more substituents selected from the group C₁-C₆alkyl, C₁-C₆alkoxy, C₁-C₆haloalkyl, sulfo, trimethylamino, triethylamino, ammonium and trifluoromethyl.

Within this group particular preference is given to those phosphines (I) in which R¹, R² and R³ independently of one another are C₁-C₈alkyl, C₅- or C₆-cycloalkyl, C₆-C₁₀aryl or C₇-C₁₂aralkyl in which alkyl, cycloalkyl, aryl and aralkyl are unsubstituted or substituted by from one to three substituents selected from the group methyl, methoxy, ethyl, ethoxy and trifluoromethyl.

Particular preference is given to phosphines (I) in which R¹, R² and R³ are methyl, ethyl, n- or i-propyl, n-, i-, s- or t-butyl, 1-, 2- or 3-pentyl, 1-, 2-, 3- or 4-hexyl, cyclopentyl, cyclohexyl, phenyl, naphthyl or benzyl, e.g. (i-C₃H₇)₃P, (C₅H₉)₃P and (C₆H₁₁)₃P.

In a preferred embodiment one or two phosphine ligands selected from the group consisting of (i-C₃H₇)₃P, (C₅H₉)₃P and (C₆H₁₁)₃P are present in the mono-component ruthenium(II) or osmium(II) complex catalyst.

An unsaturated carbocyclic ligand containing at least two double bonds is preferably chosen from the group of ligands consisting of cycloolefins having 5 to 24 carbon atoms and monocyclic, polycyclic or fused arenes which have 6 to 24, preferably 5 to 18, and particularly preferably 5 to 12 C atoms and are unsubstituted or substituted by OH, C₁-C₄-alkyl, C₁-C₄-alkoxy, C₆-C₁₂-aryl or halogen.

The term cycloolefin embraces cycloalkadienes of the type cyclopentadiene, pentamethyl, cyclooctadiene or cyclooctatetraene or larger cycloolefinic groups having at least two double bonds and up to 24 carbon atoms.

Preferred monocyclic, polycyclic or fused arene ligands are, for example, cyclopentadienyl(Cp⁻), benzene, biphenyl, or naphthaline, which may be substituted by one two three substituents selected from the group consisting of OH, C₁-C₄-alkyl, C₁-C₄-alkoxy and halogen. Preferred substituted arenes are toluene, xylene, isopropylbenzene, tert.-butylbenzene and cumene.

These arenes may also be substituted by a bivalent bridge-type C₂-C₆-alkylen, or C₄-C₈-alkyldiyliden group, which are attached to the arene group, particularly phenyl, at two adjacent C-atoms, thus forming a bicyclic aryl moiety of aromatic-saturated or aromatic partially unsaturated character.

In a preferred embodiment one or two arene ligands selected from the group consisting of benzene, cumene and chrysene are present in the mono-component ruthenium(II) or osmium(II) complex catalyst.

Additional ligands may be neutral or anionic and together with the phosphine ligands and unsaturated carbocyclic ligands mentioned above may add up to the sum of five.

Neutral ligands are commonly known in complex chemistry of transition metals such as aquo (H₂O), amino, nitrogen, carbon monoxide or nitrosyl.

Anionic ligands are also commonly known in complex chemistry of transition metals, such as H⁻, F⁻, Cl⁻, Br⁻, BF₄⁻, PF₆⁻, SbF₆⁻, AsF₆⁻, CF₃SO₃⁻, C₆H₅-SO₃⁻, 4-methyl-C₆H₄-SO₃⁻, 3,5-dimethyl-C₆H₃-SO₃⁻, 2,4,6-trimethyl-C₆H₂-SO₃⁻ and 4-CF₃-C₆H₄-SO₃⁻ and also cyano or nitrilo.

In a preferred embodiment the complex catalyst is ruthenium(II) coordinated at the central metal atom by one tertiary-substituted phosphine ligand selected from the group consisting of (i-C₃H₇)₃P, (C₅H₉)₃P and (C₆H₁₁)₃P and one unsaturated carbocyclic ligand containing at least two double bonds, e.g. benzene, cumene or chrysene. The complex catalyst may be monomeric or dimeric. Negative ionic charges are balanced by anions, such as Cl⁻, Br⁻, mesyl or tosyl.

Specific complex catalysts which are particularly preferred are selected from the group [tos is tosylate] consisting of (C₆H₁₁)₃PRu(i-C₃H₇-C₆H₅)(tos )₂, (CH₃)₃PRu(p-cumene)Cl₂, (C₆H₅)₃PRu(p-cumene)HCl, (C₅H₉)₃PRu(p-cumene)Cl₂, (C₆H₁₁)₃PRu[(C₄H₉)-C₆H₅]Cl₂, (C₆H₁₁)₃PRu(C₆H₆)(p-cumene)Br₂, (C₆R₁₁)₃PRu[1,2,4,5-(CH₃)₄C₆H₂]Cl₂, (C₆H₁₁)₃PRu[1,3,5-(i-C₃H₇)₃C₆H₃]Cl₂, (i-C₃H₇)₃PRu(p-cumene)Cl₂, (C₆H₁₁)₃PRu(chrysene)(tos)₂, (C₆H₁₁)₃PRu(p-cumene)Cl₂, (C₆H₁₁)₃PRu(p-cumene)Br₂, (C₆H₁₁)₃PRu(p-cumene)(tos)₂, (C₆H₁₁)₃P-Ru(C₆H₆)(tos)₂, (C₆H₁₁)₃PRu(CH₃-C₆H₅)(tos)₂, (C₆H₁₁)₃PRu(CH₃-CN)₂Cl₂, and (C₆H₁₁)₃PRu(p-cumene)HCl.

The term catalytically effective amount defines an amount of 0.001 to 20 mol%, particularly 0.001 to 2,0 mol%, and especially 0.01 to 1,0 mol%, based on the amount of monomer.

The ruthenium and osmium compounds to be used according to the invention are known or can be prepared by known and analogous processes starting from the metal halides (for example MeX₃) and reaction with phosphines and ligand-forming agents corresponding to the unsaturated carbocyclic ligands mentioned above. Reference is made to *WO 96/20235* and the detailed description of the above-mentioned mono-component catalysts.

### Component c)

A polymerization initiator containing a radically transferable atom or group is suitable for polymerization of the type known under the term atom transfer radical polymerization (ATRP). Initiators of this type are described in *WO 96/30421* and *WO 98/01480*. A radically transferable atom or group commonly known is Cl or Br which are cleaved from the initiator molecule.

Preferred polymerization initiators are selected from the group consisting of C₁-C₈-alkyl halide, C₆-C₁₅-aralkylhalide and C₂-C₈-haloalkyl ester, arene sulfonyl chloride, haloalkanenitriles, α-haloacrylates and halolactones.

Specific initiators are selected from the group consisting of α,α'-dichloro- or α,α'-dibromoxylene, p-toluenesulfonylchloride (PTS), hexakis-(α-chloro- or α-bromomethyl)-benzene, 2-chloro- or 2-bromopropionic acid, 2-chloro- or 2-bromoisobutyric acid, 1 -phenethyl chloride or bromide, methyl or ethyl 2-chloro- or 2-bromopropionate, ethyl-2-bromo- or ethyl-2-chloroisobutyrate, chloro- or bromoacetonitrile, 2-chloro- or 2-bromopropionitrile, α-bromo-benzacetonitrile and α-bromo-γ-butyrolactone (=2-bromo-dihydro-2(3H)-furanone).

The initiator component c) is preferably present in an amount of 0.01 mol% to 30 mol%, more preferably in an amount of 0.1 mol% to 10 mol% and most preferably in an amount of 0.1 to 5 mol%, based on the monomer, oligomer or monomer/oligomer mixture used.

The polymerizable composition may also contain in addition to the components a), b) and c) mentioned above conventional additives which are useful for the preparation of adhesives, detergents, dispersants, emulsifiers, surfactants, defoamers, adhesion promoters, corrosion inhibitors, viscosity improvers, lubricants, rheology modifiers, thickeners, crosslinkers, paper treatment compositions, water treatment compositions, electronic materials, paints, coatings, ink materials, imaging materials, superabsorbants, cosmetics, hair products, preservatives, biocide materials or modifiers for asphalt, leather, textiles, ceramics and wood.

Conventional additives such as antioxidants or light stabilizers may be added in a small quantities, such as UV absorbers, for example those of the hydroxyphenylbenzotriazole, hydroxyphenyl-benzophenone, oxalamide or hydroxyphenyl-s-triazine type. These compounds can be added individually or in mixtures, with or without sterically hindered amines (HALS).

A particularly preferred embodiment of the present invention relates to a polymerizable composition, which comprises
a) a polymerizable aliphatic monomer or oligomer selected from the group consisting of styrene, acrylic acid and salts, methacrylic acid and salts, acrylic acid esters and methacrylic acid esters;
b) a catalytically effective amount of a mono-component ruthenium(II) complex catalyst having a group of 2 to 5 ligands bonded to the coordination center, which group of ligands consists of at least one tertiary phosphine ligand selected from the group consisting of (i-C₃H₇)₃P, (C₅H₉)₃P and (C₆H₁₁)₃P and of at least one arene ligand; and
c) a polymerization initiator selected from the group consisting of C₁-C₈-alkyl halide, C₆-C₁₅-aralkylhalide and C₂-C₈-haloalkyl ester.

An especially preferred embodiment of the present invention relates to a polymerizable composition, which comprises
a) a polymerizable aliphatic monomer or oligomer selected from the group consisting of styrene, acrylic acid and salts, methacrylic acid and salts, acrylic acid esters and methacrylic acid esters;
a catalytically effective amount of a mono-component ruthenium(II) complex catalyst [tos is tosylate] selected from the group consisting of (C₆H₁₁)₃PRu(i-C₃H₇-C₆H₅)(tos )₂, (CH₃)₃PRu(p-cumene)Cl₂, (C₆H₅)₃PRu(p-cumene)HCl, (C₅H₉)₃PRu(p-cumene)Cl₂, (C₆H₁₁)₃PRu[(C₄H₉)-C₆H₅]Cl₂, (C₆H₁₁)₃PRu(C₆H₆)(p-cumene)Br₂, (C₆H₁₁)₃PRu[1,2,4,5-(CH₃)₄C₆H₂]Cl₂, (C₆H₁₁)₃PRu[1,3,5-(i-C₃H₇)₃C₆H₃]Cl₂, (i-C₃H₇)₃PRu(p-cumene)Cl₂, (C₆H₁₁)₃PRu(chrysene)(tos)₂, (C₆H₁₁)₃PRu(p-cumene)Cl₂, (C₆H₁₁)₃PRu(p-cumene)Br₂, (C₆H₁₁)₃PRu(p-cumene)(tos)₂, (C₆H₁₁)₃PRu(C₆H₆)(tos)₂, (C₆H₁₁)₃PRu(CH₃-C₆H₅)(tos)₂, and (C₆H₁₁)₃PRu(p-cumene)HCl;
c) a polymerization initiator selected from the group consisting of C₁-C₈-alkyl halide, C₆-C₁₅-aralkylhalide and C₂-C₈-haloalkyl ester.

Another embodiment of the present invention relates to the use of the ruthenium(II) or osmium(II) complex catalysts defined above as a mono-component catalyst for effecting polymerization of an aliphatic monomer or oligomer with ethylene groups.

Another embodiment of the present invention relates to a process for preparing an oligomer, a cooligomer, a polymer or a copolymer by free radical polymerization of at least one aliphatic monomer or oligomer with ethylene groups, which comprises polymerizing the aliphatic monomer or oligomer in the presence of a polymerization initiator having a radically transferable atom or group and a catalytically effective amount of a mono-component ruthenium(II) or osmium(II) complex catalyst having a group of 2 to 5 ligands bonded to the coordination center, which group of ligands consists of at least one tertiary phosphine ligand and of at least one unsaturated carbocyclic ligand having at least two double bonds under reaction conditions effecting atom transfer radical polymerization.

The process may be carried out in the presence of water or an organic solvent or mixtures thereof. Additional cosolvents or surfactants, such as glycols or ammonium salts of fatty acids, may be added to the solvent.

The amount of solvent should kept as low as possible. In the reaction mixture, preferably more than 30% by weight of the composition defined above are used, particularly preferably more than 50% and most preferably more than 80%.

If organic solvents are used, suitable solvents or mixtures of solvents are typically pure alkanes (hexane, heptane, octane, isooctane), hydrocarbons (benzene, toluene, xylene), halogenated hydrocarbons (chlorobenzene), alkanols (methanol, ethanol, ethylene glycol, ethylene glycol monomethyl ether), esters (ethyl acetate, propyl, butyl or hexyl acetate) and ethers (diethyl ether, dibutyl ether, ethylene glycol dimethyl ether, tetrahydrofurane), or mixtures thereof.

If water is used as a solvent the reaction mixture can be supplemented with a water-miscible or hydrophilic cosolvent. The reaction mixture will then remain in a homogeneous single phase throughout the monomer conversion. Any water-soluble or water-miscible cosolvent may be used, as long as the aqueous solvent medium is effective in providing a solvent system which prevents precipitation or phase separation of the reactants or polymer products until full completion of the polymerization. Exemplary cosolvents useful in the process may be selected from the group consisting of aliphatic alcohols, glycols, ethers, glycol ethers, pyrrolidines, N-alkyl pyrrolidinones, N-alkyl pyrrolidones, polyethylene glycols, polypropylene glycols, amides, carboxylic acids and salts thereof, esters, organosulfides, sulfoxides, sulfones, alcohol derivatives, hydroxyether derivatives such as butyl carbitol or cellosolve, amino alcohols, ketones, and the like, as well as derivatives and mixtures thereof. Specific examples include methanol, ethanol, propanol, dioxane, ethylene glycol, propylene glycol, diethylene glycol, glycerol, dipropylene glycol, tetrahydrofuran, and other water-soluble or water-miscible materials, and mixtures thereof. When mixtures of water and water-soluble or water-miscible organic solvents are selected for the process, the water to cosolvent weight ratio is typically in the range of about 100:0 to about 10:90.

When monomer mixtures or monomer/oligomer mixtures are used, the calculation of mol% is based on an average molecular weight of the mixture.

Hydrophilic monomers, polymers and copolymers of the present invention can be separated from one another or from the polymerization reaction mixture by, for example, changing the pH of the reaction media and by other well known conventional separation techniques.

The polymerization temperature may range from about 50°C to about 180°C, preferably from about 80°C to about 150°C. At temperatures above about 180°C, the controlled conversion of the monomer into polymer may decrease, and undesirable by-products like thermally initiated polymers are formed or decomposition of the components may occur.

The resulting polymers are usually colorless and characterized by a low halogen content. The polymers or copolymers can be used in most cases without any further purification step. This is an important advantage when industrial scale-up is intended.

After completing the polymerizing step process, the formed (co)polymer obtained is isolated. The isolating step of the present process is carried out by known procedures, e.g. by distilling off the unreacted monomer or by precipitation in a suitable liquid phase and filtering the precipitated polymer followed by washing and drying the polymer.

Another embodiment of the present invention relates to any polymer or oligomer product obtainable by the process defined above. Thus, the present invention also encompasses in the process the preparation of novel block, multi-block, star, gradient, random, hyper-branched and dendritic copolymers, as well as graft or copolymers.

A specific embodiment of the invention relates to the preparation of block copolymers, which comprises performing the polymerization process defined above and adding to the reaction mixture
a) a polymerizable aliphatic monomer or oligomer containing ethylene groups; optionally in the presence of additional amounts of
b) a catalytically effective amount of a mono-component ruthenium(II) or osmium(II) complex catalyst containing a group of 2 to 5 ligands bonded to the coordination center, which group of ligands consists of at least one tertiary phosphine ligand and of at least one unsaturated carbocyclic ligand containing at least two double bonds; and
c) a polymerization initiator containing a radically transferable atom or group.

The reaction conditions for preparing the block copolymers are analogous to the reaction conditions for preparing by free radical polymerization the oligomer, cooligomer, polymer or copolymer defined above.

Because the present polymerization is a "living" polymerization, it can be started and stopped practically at will. Thus, in one embodiment of this invention, once the first monomer is consumed in the initial polymerizing step a second monomer can then be added to form a second block on the growing polymer chain in a second polymerization step. Therefore it is possible to carry out additional polymerizations with the same or different monomer(s) to prepare multi-block copolymers. Furthermore, since this is a radical polymerization, blocks can be prepared in essentially any order. One is not necessarily restricted to prepare block copolymers where the sequential polymerizing steps must flow from the least stabilized polymer intermediate to the most stabilized polymer intermediate, such as is the case in ionic polymerization. Thus it is possible to prepare a multi-block copolymer in which a polyacrylonitrile or a poly(meth)acrylate block is prepared first, then a styrene block is attached thereto, and so on.

The (co)polymers of the present invention may have an average molecular weight distribution from 1 000 to 400 000 g/mol, preferably from 2 000 to 250 000 g/mol and, more preferably, from 2 000 to 200 000 g/mol. When produced in bulk, the number average molecular weight may be up to 500 000. The number average molecular weight may be determined by size exclusion chromatography (SEC), gel permeation chromatography (GPC), matrix assisted laser desorption/ionization mass spectrometry (MALDI-MS) or, if the initiator carries a group which can be easily distinguished from the monomer(s), by NMR spectroscopy or other conventional methods.

The (co)polymers of the present invention typically have a low polydispersity. Preferably the polydispersity is from 1.1 to 2.2, more preferably from 1.1 to 1.9 and most preferably from 1.2 to 1.8.

### Examples

### Example 1

1. Materials and Methods
Monomers (1 ml): methyl-methacrylate (MMA), styrene (St), n-Butyl-acrylate (n-BA);
Initiator (l, 0.1 M in toluene): 2-bromo-isobutyrate (EiBr), (CH₃)₂CBr-CO₂Me;
Catalyst: 0.0116 mmol (6-7 mg depending on the molecular weight of each Ru-phosphine complex used); Reaction conditions: round flask, 16 h at 85°C under nitrogen.

2.

**Table 1**

| Effect of the halogen ligand. | | |
|---|---|---|
| Catalyst: RuX₂CumPCy₃ | Yield (%) | PDI |
| X=Cl | 100 | 1.12 |
| X=Br | 83 | 1.24 |
| X=l | 73 | 1.66 |
| Cum: p-Cumene; Cy: Cyclohexyl | | |

3.

**Table 2**

| Effect of the monomer (catalyst: RuCl₂CumPCy₃) | | | |
|---|---|---|---|
| Monomer | Temperature | Yield (%) | PDI |
| MMA | 85 | 100 | 1.12 |
| Styrol | 110 | 64 | 1.3 |
| n-BA | 85 | 80 | 1.96 |

4.

**Table 4**

| Effect of the in-situ preparation of the catalyst [(RuCl₂Cum)₂+ PCy₃; monomer: MMA]. | | | | |
|---|---|---|---|---|
| PCy₃/Ru | Yield (%) | Mₙ (calculated) | Mₙ (found) | PDI |
| 2.0 | 70 | 28030 | 28500 | 1.69 |

5.

**Table 4**

| Effect of the phosphine ligand; monomer: MMA. catalyst: RuCl₂Cum(phosphin) | | |
|---|---|---|
| Phosphin | Yield (%) | PDI |
| P(Me)₃ | 26 | 1.76 |
| P(n-Bu)₃ | 44 | 1.6 |
| P(Ph)₃ | 20 | 1.6 |
| PCyPh₂ | 58 | 1.25 |
| P(l-Propyl)₃ | 80 | 1.1 |
| PCy₂Ph | 90 | 1.1 |
| P(Benzyl)₃ | 30 | 1.61 |
| PCy₃ | 100 | 1.12 |

### Example 2

1. Materials and Methods
Monomer (M, 5 ml): Methyl-methacrylat (MMA)
Initiator (l, added in undiluted form with the injection syringe): 2-bromomethylpropionate (MBP), CH₃CHBr-CO₂Me;
Reaction conditions; 0.5 - 2 h, 85°C, under nitrogen, no solvent added.

2.

**Table 5**

| Monomer initiator relationship ([M]:[I]; catalyst: RuCl₂CumPCy₃ (Mw: 586.63 g/mol); [I]:[Cat] = 1:0.5. | | | | | |
|---|---|---|---|---|---|
| [M]:[I] | time (h) | conversion (%) | Mₙ (calculated) | Mₙ (found) | PDI |
| 100:1 | 0.5 | 94 | 9410 | 9030 | 1.40 |
| 200:1 | 1.5 | 100 | 20020 | 19560 | 1.6 |
| 400:1 | 2 | 92 | 36840 | 32390 | 1.25 |
| 50:1 | 0.5 | 96 | 4810 | 3510 | 1.96 |

3.

**Table 7**

| Monomer initiator relationship ([M]:[I]; catalyst: RuCl₂CumP(i-Pr)₃ (Mw: 466.44 g/mol). [I]:[Cat] = 1:0.5. | | | | | |
|---|---|---|---|---|---|
| [M]:[I] | time (h) | conversion (%) | Mₙ (calculated) | Mₙ (found) | PDI |
| 100:1 | 1.0 | 95 | 9510 | 10430 | 1.33 |
| 200:1 | 2.75 | 96 | 19220 | 19760 | 1.34 |

4.

**Table 8**

| Preparation of polymers of low halogen content and different molecular weights;. monomer: MMA; catalyst: RuHClCumPCy₃ (Mw: 552.20 g/mol); Cl-content: 0.0% (calculated); < 0.3% (found). | | | | | | | |
|---|---|---|---|---|---|---|---|
| [M]:[I]:[Cat] | time (h) | conversion (%) | Mₙ (calc.) | Mₙ (found) | PDI | Br-% (calc.) | Br-% (found) |
| 25:1:0.5 | 0.08 | 95 | 2380 | 3510 | 1.96 | 2.33 | 0.3 |
| 113:1:0.57 | 0.25 | 88 | 9960 | 10360 | 1.71 | 0.78 | < 0.3 |
| 224:1:0.57 | 0.33 | 92 | 20630 | 23410 | 1.63 | 0.34 | < 0.3 |
| 2000:1:0.5 | 2.0 | 56 | 112130 | 138700 | 2.32 | 0.057 | < 0.3 |
| 25:1:0.2 | 0.12 | 90 | 2250 | 4480 | 1.76 | 1.82 | 0.92 |

## Claims

1. A polymerizable composition, which comprises:
a) a polymerizable aliphatic monomer or oligomer containing ethylene groups;
b) a catalytically effective amount of a mono-component ruthenium(II) or osmium(II) complex catalyst containing a group of 2 to 5 ligands bonded to the coordination center, which group of ligands consists of at least one tertiary phosphine ligand and of at least one unsaturated carbocyclic ligand containing at least two double bonds; and
c) a polymerization initiator containing a radically transferable atom or group.

2. A composition according to claim 1, which comprises, as component a), a polymerizable aliphatic monomer or oligomer selected from the group consisting of styrene, acrolein, acrylonitrile, acrylic or C₁-C₄-alkylacrylic acid and salts, acrylic or C₁-C₄-alkylacrylic acid-C₁-C₄-alkyl esters, acrylic or C₁-C₄-alkylacrylamides and acrylic or C₁-C₄-alkylacrylic acid anhydrides.

3. A composition according to claim 1, which comprises, as component a), a polymerizable aliphatic monomer or oligomer selected from the group consisting of styrene, acrylic acid and salts, methacrylic acid and salts, acrylic acid-C₁-C₄-alkyl esters and methacrylic acid-C₁-C₄-alkyl esters.

4. A composition according to claim 1, which comprises, as component b), a catalytically effective amount of a mono-component ruthenium(II) complex catalyst having a group of 2 to 5 ligands bonded to the coordination center, which group of ligands consists of at least one tertiary phosphine ligand and of at least one arene ligand.

5. A composition according to claim 4, wherein the tertiary phosphine ligand is selected from the group consisting of (i-C₃H₇)₃P, (C₅H₉)₃P and (C₆H₁₁)₃P.

6. A composition according to claim 4, wherein the arene ligand is selected from the group consisting of cyclopentadienyl, pentamethyl, phenyl and phenyl substituted by substituents from the group consisting of halogen, C₁-C₄-alkyl, C₁-C₆-alkoxy and bivalent, bridge-type C₂-C₆-alkylen or C₄-C₈-alkyldiylidene groups, which are attached to the phenyl at two adjacent carbon atoms and which form with these C-atoms a condensed bicyclic substituent.

7. A composition according to claim 1, which comprises, as component c), a polymerization initiator selected from the group consisting of C₁-C₈-alkyl halide, C₆-C₁₅-aralkylhalide and C₂-C₈-haloalkyl ester, arene sulfonyl chloride, haloalkanenitriles, α-haloacrylates and halolactones.

8. A composition according to claim 1, which comprises
a) a polymerizable aliphatic monomer or oligomer selected from the group consisting of styrene, acrylic acid and salts, methacrylic acid and salts, acrylic acid esters and methacrylic acid esters;
b) a catalytically effective amount of a mono-component ruthenium(II) complex catalyst having a group of 2 to 5 ligands bonded to the coordination center, which group of ligands consists of at least one tertiary phosphine ligand selected from the group consisting of (i-C₃H₇)₃P, (C₅H₉)₃P and (C₆H₁₁)₃P and of at least one arene ligand; and
c) a polymerization initiator selected from the group consisting of C₁-C₈-alkyl halide, C₆-C₁₅-aralkylhalide and C₂-C₈-haloalkyl ester.

9. A process for preparing an oligomer, a cooligomer, a polymer or a copolymer by free radical polymerization of at least one aliphatic monomer or oligomer with ethylene groups, which comprises polymerizing the aliphatic monomer or oligomer in the presence of a polymerization initiator having a radically transferable atom or group and a catalytically effective amount of a mono-component ruthenium(II) or osmium(II) complex catalyst having a group of 2 to 5 ligands bonded to the coordination center, which group of ligands consists of at least one tertiary phosphine ligand and of at least one unsaturated carbocyclic ligand having at least two double bonds under reaction conditions effecting atom transfer radical polymerization.

10. A polymer or oligomer obtainable by the process according to claim 9.

11. A process for the preparation of block copolymers, which comprises performing the polymerization process according to claim 9 and adding to the reaction mixture
a) a polymerizable aliphatic monomer or oligomer containing ethylene groups; optionally in the presence of additional amounts of
b) a catalytically effective amount of a mono-component ruthenium(II) or osmium(II) complex catalyst containing a group of 2 to 5 ligands bonded to the coordination center, which group of ligands consists of at least one tertiary phosphine ligand and of at least one unsaturated carbocyclic ligand containing at least two double bonds; and
c) a polymerization initiator containing a radically transferable atom or group.

12. A block copolymer obtainable by the process according to claim 11.

13. Use of a ruthenium(II) or osmium(II) complex catalyst having a group of 2 to 5 ligands bonded to the coordination center, which group of ligands consists of at least one tertiary phosphine ligand and of at least one unsaturated carbocyclic ligand having at least two double bonds as a mono-component catalyst for effecting polymerization of an aliphatic monomer or oligomer with ethylene groups.
